# EUROPÄISCHE PATENTSCHRIFT

(11) **EP 1 217 483 B1**
(45) Veröffentlichungstag und Bekanntmachung des Hinweises auf die Patenterteilung: **28.05.2008**
(21) Anmeldenummer: 01123617.1
(22) Anmeldetag: 02.10.2001
(51) Int. Cl.: G05B 19/418

(54) **Bearbeitungseinrichtung und Maschinensteuerprogramm**
Processing device and control program of machining
Dispositif d'usinage et programme de commande de machine

(30) Priorität: 14.12.2000 DE 10062471
(43) Veröffentlichungstag der Anmeldung: 26.06.2002
(73) Patentinhaber: Witzig & Frank GmbH, 77652 Offenburg (DE)
(72) Erfinder: Baumbusch, Frank, 69412 Eberbach (DE); Bauer, Walter, 75397 Simmozheim (DE)
(74) Vertreter: Rüger, Barthelt & Abel Patentanwälte

(56) Entgegenhaltungen:
- EP-A- 0 463 176
- EP-A- 0 706 103
- DE-A- 3 146 342
- DE-A- 3 602 457

## Beschreibung

Die Erfindung betrifft eine Maschinenanlage oder eine Bearbeitungseinrichtung mit mehreren Bearbeitungsstationen und ein Programm zur Steuerung einer solchen Maschinenanlage oder Bearbeitungseinrichtung.

Aus der Praxis sind Werkzeugmaschinen und Fertigungsanlagen bekannt, bei denen ein Werkstück mehrere Bearbeitungsstationen durchläuft, wobei in den Bearbeitungsstationen einzelne Bearbeitungsschritte an dem Werkstück durchgeführt werden. Die Bearbeitung der Werkstücke erfolgt in den einzelnen Bearbeitungsstationen, unter Umständen in unterschiedlichen Werkstückpositionen. Die Einstellung (Einrichtung) der einzelnen Bearbeitungsstationen gestaltet sich deshalb häufig sehr unübersichtlich.

Darüber hinaus kann es problematisch sein, die einzelnen Bearbeitungsschritte so auf die Bearbeitungsstationen aufzuteilen, dass die Bearbeitungseinrichtung mit maximalem Ausstoß arbeitet. Dies setzt voraus, dass Wartezeiten vermieden werden.

Dies erschwert die Bedienung solcher an sich hoch effizienter Werkzeugmaschinen.

Aus der DE 31 46 342 A ist eine NC-Daten-Teil- und -aufbereitungseinrichtung für ein NC-Werkzeugmaschinensystem bekannt. Bei diesem wird die Bearbeitungsinformation zur Bearbeitung eines Werkstücks von einem NC-Daten-Divisionsprozessor in eine Mehrzahl von Bearbeitungselementinformation unterteilt, deren jede von einem einzigen Werkzeug durchführbar ist. Ausgewählte Bearbeitungselementinformationen werden von einem NC-Datenaufbereitungsprozessor nach Maßgabe der von einem Auftragszuweisungsprozessor bestimmten Auftragszuweisung verknüpft und aufbereitet.

Zu Bereitstellung der NC-Daten ist aber eine manuelle Umsetzung von Zeichnungsmaßen in NC-Befehle erforderlich.

Aus der EP 0 706 103 A1 sind ein Verfahren und eine Vorrichtung zur Programmieren einer Werkzeugmaschine bekannt. Diese weist eine Bearbeitungsstation mit einer Arbeitsspindel auf und dient dazu, an Werkstücken vorgegebene Bearbeitungsvorgänge durchzuführen. Es ist eine Steuerungseinrichtung zur Steuerung der Werkzeugmaschine vorgesehen. Die Steuerungseinrichtung umfasst eine Koordinatentransformationseinrichtung zur Umwandlung von Werkstück bezogenen CAD-Daten in Stellbefehle für die Werkzeugmaschine in deren eigenen Koordinatensystem.

Davon ausgehend ist es Aufgabe der Erfindung, eine Bearbeitungseinrichtung sowie ein Bedienungsprogramm für diese zu schaffen, bei der bzw. durch das die Bedienung der Anlage oder Einrichtung erleichtert ist.

Diese Aufgabe wird durch die Bearbeitungseinrichtung nach Anspruch 1 gelöst.

Die erfindungsgemäße Bearbeitungseinrichtung weist mehrere Maschinen oder wenigstens mehrere Bearbeitungsstationen auf, die dazu dienen, an Werkstücken vorgegebene Bearbeitungsvorgänge durchzuführen und prinzipiell dazu eingerichtet sind, verschiedene, aus einer Liste von Bearbeitungsvorgängen ausgewählte Bearbeitungsvorgänge durchzuführen. Bspw. handelt es sich um Fräs- und Bohrbearbeitungsvorgänge, für die jeweils eine drehend angetriebene Arbeitspindel vorgesehen ist. Sind in den einzelnen Bearbeitungsstationen jeweils ein oder mehrere Arbeitsspindeln angeordnet, können in den Bearbeitungsstationen entsprechend den an den Arbeitsspindeln vorgesehenen Werkzeugen Bohrungen an dem Werkstück angebracht, Flächen gefräst, Gewinde geschnitten oder sonstige Bearbeitungen vorgenommen werden. Konkret bedeutet dies, dass ein Bearbeitungsvorgang, wie bspw. das Herstellen einer Bohrung, sofern keine vorbereitenden Schritte erforderlich sind, in jeder Bearbeitungsstation durchgeführt werden kann.

Die Steuerungseinrichtung enthält ein Zuordnungsmodul, das genau dies festlegt, nämlich auf welcher Maschine oder Bearbeitungsstation welcher Bearbeitungsvorgang durchgeführt wird. Dadurch wird die Möglichkeit der automatischen Zuordnung bzw. Verteilung der Bearbeitungsvorgänge auf die Bearbeitungsstationen (oder Maschinen) und somit die Möglichkeit der Zeitoptimierung geschaffen. Unabhängig davon wird jedoch eine erhebliche Bedienungsvereinfachung gegenüber herkömmlichen Anlagen- oder Maschinenprogrammierverfahren erreicht, bei denen die Bearbeitungsschritte, die zur Bearbeitung des Werkstücks erforderlich sind, von einem Einrichter oder Bediener von Hand den einzelnen Arbeitsspindeln der Bearbeitungseinrichtung zugeordnet worden sind. Durch die erfindungsgemäße automatische Zuordnung genügt es nunmehr wenn für das Werkstück eine Beschreibung der durchzuführenden Bearbeitungsvorgänge, bezogen auf ein Werkzeug-Koordinatensystem und die erforderlichen Bearbeitungszeiten vorzugeben. Die Verteilung der einzelnen Bearbeitungsvorgänge auf einzelne Bearbeitungsstationen und Bearbeitungseinheit geschieht automatisch.

Ist eine Zuordnung der Bearbeitungsvorgänge zu den einzelnen Bearbeitungsstationen (oder Maschinen) und Arbeitsspindeln gefunden, bestimmt die Steuerungseinrichtung aufgrund der gegebenen Zuordnung von Bearbeitungsschritten zu Bearbeitungsstationen und Arbeitsspindeln aus den Bearbeitungsdaten (auf das Werkstück bezogene Maße) Stellbefehle für die Bearbeitungsstationen in deren eigenen Koordinatensystemen. Dies bedeutet eine ganz erhebliche Bedienungserleichterung für den Bediener/Einrichter. Bei Werkstücken, an denen sehr viele Einzeloperationen durchzuführen sind und die in den einzelnen Bearbeitungsstationen zwischen einzelnen Bearbeitungsschritten womöglich mehrfach neu positioniert werden, muss sich der Bediener nun keine Gedanken mehr darüber machen, welche Arbeitsspindel die Bearbeitung an dem Werkstück aus welcher Richtung vornimmt und wie das gewünschte Bearbeitungsergebnis in Stellbefehle für die Arbeitsspindel bzw. deren Vorschub umzusetzen sind. Die Programmierung der Bewegung der Arbeitsspindeln in den Bearbeitungsstationen erfolgt ausschließlich auf Basis eines auf das Werkstück bezogenen Koordinatensystem, ohne genaue Kenntnis des Programmierers in welcher Bearbeitungsstation die Bearbeitung durch welche Arbeitsspindel vorgenommen wird und in welche Richtung diese bewegt wird.

Damit ist die Erfindung zur Programmierung komplexer Maschinen oder Anlagen einsetzbar, die aus mehreren Maschinen bzw. Bearbeitungsstationen bestehen. Dies hat vor allem bei der Herstellung von sehr anspruchsvollen Werkstücken Bedeutung, die eine Bearbeitung in sehr vielen Einzelschritten erfordern. Die Erfindung ermöglicht es dem Anwender, einfach und sicher eine Prozesskette zu erstellen.

In jeder Bearbeitungsstation können mehrere Bearbeitungseinheiten angeordnet sein. Wenn diese dazu eingerichtet sind, das Werkstück aus zwei unterschiedlichen Richtungen zu bearbeiten, können an ein- und demselben Werkstück gleichzeitig mehrere Bearbeitungsoperationen vorgenommen werden. Jede Bearbeitungseinheit ist vorzugsweise mit wenigstens einer oder mehreren Stellvorrichtungen verbunden, mit denen die Bearbeitungseinheit in Bezug auf das Werkstück positionierbar ist. In welcher Richtung die Positionierung im Bezug auf das Werkstück erfolgt, hängt dabei von der Werkstückposition ab. Die Umrechnung der Werkstückkoordinaten in die Koordinaten der Bearbeitungsstationen und Bearbeitungseinheiten (Koordinatentransformation) erfolgt automatisch auf Basis der Zuordnungstabelle.

Bei der Bearbeitungseinrichtung sind die Werkstücke vorzugsweise von einer Werkstückaufnahme getragen, die jeweils mit Positioniereinrichtungen verbunden sind. Diese dienen dazu, das betreffende Werkstück in der jeweiligen Bearbeitungsstation in voneinander verschiedene Bearbeitungspositionen, zu bewegen und bedarfsweise in diesen zu fixieren. Dadurch können die Werkstücke in ein- und derselben Bearbeitungsstation von unterschiedlichen Seiten bearbeitet werden. Sind die Bearbeitungseinheiten bspw. als Werkzeugrevolver ausgeführt, kann dies mit unterschiedlichen Arbeitsspindeln und somit mit unterschiedlichen Werkzeugen geschehen. Dabei ergeben sich sehr viele Bearbeitungsmöglichkeiten und es kann eine sehr hohe Produktivität erzielt werden. Die von der Werkstückposition abhängige Umrechnung der Werkstückkoordinaten in die jeweiligen Stellbefehle und Koordinaten der Bearbeitungsstationen erfolgt wiederum aufgrund der Zuordnungstabelle automatisch, die in der Steuereinrichtung bereitgehalten wird. Die Werkstücke werden vorzugsweise im Gleichtakt von Bearbeitungsstation zu Bearbeitungsstation gefördert. Die Steuereinrichtung ist dabei dazu vorgesehen, sicherzustellen, dass der Weitertransport der Werkstücke jeweils erfolgt, wenn alle Bearbeitungseinheiten ihre Arbeit beendet haben. Die Bearbeitungsvorgänge sind in ihrer Zuordnung zu den einzelnen Bearbeitungsstationen und Bearbeitungseinheiten (Revolverköpfen) in einer entsprechenden Liste oder Tabelle vermerkt, die in einer Speichereinrichtung abgespeichert ist. Das Zuordnungsmodul führt die Zuordnung der erforderlichen Bearbeitungsvorgänge zu den Bearbeitungsstationen so aus, dass zeitlich Differenzen zwischen den Arbeitszyklen in den einzelnen Bearbeitungsstationen etwa gleich lang sind. Dies bedeutet, dass zeitliche Differenzen zwischen den in den Bearbeitungsstationen durchzuführenden Bearbeitungsvorgängen minimiert werden. Dies erreicht das Zuordnungsmodul durch Sortierung der Bearbeitungsvorgänge entsprechend ihrer Priorität und Dauer und Zuordnung zu den Bearbeitungsstationen, beginnend mit den längsten Bearbeitungsvorgängen (Aufträgen). Um einen Anhaltspunkt dafür zu haben, wie lang die in jeder Bearbeitungsstation durchzuführende Bearbeitung (Bearbeitungsauftrag) insgesamt dauert (Zykluszeit), kann zunächst einmal die Dauer aller Bearbeitungsaufträge durch die Anzahl der Bearbeitungseinheiten und Bearbeitungsstationen geteilt werden. Dies kann bedarfsweise getrennt nach Bearbeitungsrichtungen bezogen auf das Werkstück geschehen. Die sich so grob abgeschätzt ergebende Zykluszeit kann einen ersten Anhaltspunkt dafür liefern, ob die für eine Bearbeitungsstation vorgesehenen Bearbeitungsvorgänge (auch synonym bezeichnet als "Bearbeitungsaufträge") tatsächlich realisiert werden können oder nicht.

Zur Durchführung der Zuordnung der Bearbeitungsvorgänge auf die Bearbeitungsstationen erstellt das Zuordnungsmodul zunächst Listen von Bearbeitungsvorgängen, die in bestimmten vorgegebenen Reihenfolgen durchzuführen sind, wie bspw. zunächst das Bohren eines Kernlochs und danach des Schneiden eines Gewindes. Im Weiteren teilt das Zuordnungsmodul zunächst einmal die längsten Bearbeitungsvorgänge auf die einzelnen Bearbeitungsstationen auf, bspw. indem, wenn drei Bearbeitungsstationen vorhanden sind, die drei längsten Bearbeitungsvorgänge gesucht und jeweils einer jeder Bearbeitungsstation zugeordnet werden. Dies unter Berücksichtigung der in den oben genannten Teillisten bestimmten Reihenfolge der Bearbeitungsvorgänge, falls eine solche hier bindend ist. Im Weiteren werden aus den verbleibenden Arbeitsvorgängen jeweils diejenigen mit der größten Bearbeitungszeit herausgesucht und der Bearbeitungseinheit oder Bearbeitungsstation zugeordnet, in der noch die meiste Zeit zur Verfügung steht. Dies wird immer unter Berücksichtung der vorgegebenen Bearbeitungsreihenfolge (siehe Teillisten) durchgeführt, d.h. die Reihenfolge der Durchführung einzelner aufeinander aufbauender Bearbeitungsvorgänge wird als weiteres Sortierkriterium berücksichtigt. Wenn aus Gründen der vorgegebenen Bearbeitungsreihenfolge zwei Bearbeitungsvorgänge einer Bearbeitungsstation und in dieser der gleichen Bearbeitungseinheit zugeordnet werden müssen und wenn die Summe der Bearbeitungszeiten der beiden Bearbeitungsvorgänge größer ist als eine vorgesehene Zykluszeit, wird die Zykluszeit auf die Summe erhöht.

Ist eine Aufteilung der einzelnen Bearbeitungsvorgänge auf die verschiedenen Bearbeitungsstationen erreicht, überprüft das Zuordnungsmodul, ob vorhandene Bearbeitungszeitdifferenzen zwischen den Bearbeitungszeiten in den Bearbeitungsstationen größer sind als die kürzest vorhandenen Bearbeitungszeiten. Falls ja, werden die Bearbeitungsvorgänge mit den kürzesten Bearbeitungszeiten, falls möglich, verschoben. Finden sie sich in Bearbeitungsstationen die insgesamt mehr Zeit benötigen als andere Bearbeitungsstationen, werden sie zu den Bearbeitungsstationen mit kürzeren Bearbeitungszeiten verschoben. Finden sie sich hingegen in Bearbeitungsstationen mit kürzerer Zykluszeit, werden diese Bearbeitungsvorgänge in Bearbeitungsstationen mit längerer Zykluszeit verschoben und zum Ausgleich werden aus diesen Bearbeitungsstationen Bearbeitungsvorgänge längerer Bearbeitungszeit in die Bearbeitungsstationen mit kürzeren Zykluszeiten verschoben. Dieses kann im Rahmen einer Ausgleichsprozedur geschehen, die in einem eigenen Programmmodul (Ausgleichsmodul) verwirklicht sein kann.

Ist durch das Zuordnungsmodul und ggfs. das Ausgleichsmodul eine Aufteilung der einzelnen Bearbeitungsvorgänge auf die Bearbeitungsstationen, Bearbeitungseinheiten und Arbeitsspindeln erreicht, kann auf Basis dieser Zuordnung ein Maschinensteuerprogramm erstellt werden. Dieses Maschinensteuerprogramm wird in dem Berechnungsmodul erzeugt und enthält alle zur Durchführung der Bearbeitungsvorgänge erforderlichen Positionier- und Stellbefehle. Daraus ergeben sich dann die realen, zur Durchführung der Bearbeitungsvorgänge in den Bearbeitungsstationen erforderlichen Zykluszeiten, die an das Zuordnungsmodul zurückgemeldet werden können. Stellt sich heraus, dass die Zykluszeiten in den einzelnen Bearbeitungsstationen nach wie vor im Wesentlichen miteinander übereinstimmen, wird die gewählte Zuordnung beibehalten. Falls nicht, kann erneut das Ausgleichsmodul dazu benutzt werden, die Zuordnung der Bearbeitungsvorgänge zu einzelnen Bearbeitungsstationen und Arbeitsspindeln zu ändern. Hier können nun Bearbeitungszeiten zzgl. der erforderlichen Verstellzeiten und Positionierzeiten zugrunde gelegt werden. Für eine geänderte Zuordnung bilden diese Verstellzeiten und Positionierzeiten der zuvor gewählten Zuordnung eine Annäherung, die wiederum durch Übergabe der Daten an das Berechnungsmodul überprüft werden kann. Auf diese Weise kann in einem iterativen Rechengang letztendlich eine optimierte Zuordnung erreicht werden.

Bei einer vorteilhaften Ausführungsform der Erfindung dient das Steuerprogramm für die Bearbeitungsmaschine oder - Einrichtung nicht nur der Erstellung des Maschinensteuerprogramms für die einzelnen Bearbeitungsstationen und Arbeitsspindeln, unabhängig von der Kenntnis des Bedieners und Programmierers darüber, in welcher Bearbeitungsstation welche Bearbeitungsvorgänge ausgeführt werden, sondern darüber hinaus zur Korrektur der Maschineneinstellung in Abhängigkeit von gefertigten Probewerkstücken. Dazu dient eine Messeinrichtung, die Stichproben oder Probeweise gefertigte Lose von Werkstücken auf Maßhaltigkeit überprüft. Die Messung wird in einem Koordinatensystem durchgeführt, das bspw. werkstückspezifisch ist, d.h. das Mess-Koordinatensystem ist in jedem Fall unabhängig von den Koordinatensystemen der einzelnen Bearbeitungsstationen. Weichen die ermittelten Messwerte der Maße des Werkstücks von dessen Sollwerten ab, kann eine automatische Nachstellung der entsprechenden Bearbeitungseinheiten stattfinden. Dazu wird der Teil des Maschinensteuerprogramms, der die den betreffenden Bearbeitungsvorgang durchführende Arbeitsspindel steuert, angepasst oder abgeändert. Der Bediener muss dazu bei einer vorteilhaften Ausführungsform des erfindungsgemäßen Steuerprogramms nicht mehr im Einzelnen nachvollziehen, an welcher speziellen Bearbeitungsstation ein das Werkstückmaß festlegender Bearbeitungsvorgang durchgeführt wird. Das Steuerprogramm enthält diese Information in einer Zuordnungstabelle, die bspw. mit dem Zuordnungsmodul erzeugt worden ist und die Basis für die Aufteilung der erforderlichen Bearbeitungsvorgänge auf die einzelnen Bearbeitungsstationen bildet. Über die Zuordnungstabelle werden die in dem Mess-Koordinatensystem erfassten Abweichungen der Istwerte von den Sollwerten der betreffenden Werkstückabmessungen in die Koordinaten der betreffenden Bearbeitungsstation umgerechnet, auf die die Zuordnungstabelle verweist. Auf Basis dieses Koordinatensystems der Bearbeitungsstation kann das Berechnungsmodul nun ein entsprechend geänderten Teil für das Maschinensteuerprogramm berechnen.

Vorteilhaft ist bei dieser Ausführungsform, dass die Messergebnisse automatisch zur Nachstellung bzw. Einrichtung der Bearbeitungseinrichtung herangezogen werden können, ohne dass ein Bediener dazu überhaupt nachvollziehen muss, in welcher Bearbeitungsstation das betreffende Werkstückmaß erzeugt wird und wie das Maschinensteuerprogramm für diese Bearbeitungsstation geändert werden muss. Dies ist insbesondere dann eine erhebliche Bedienungserleichterung, wenn das Werkstück in den Bearbeitungsstationen oder zwischen diesen seine Position ändert, so dass das Werkstück-Koordinatensystem in den einzelnen Bearbeitungsstationen bewegt wird oder unabhängig davon eine grundsätzlich andere Ausrichtung aufweist als in der Messmaschine oder bei der Betrachtung (Konstruktion) des Werkstücks zugrundegelegt.

Vorteilhafte Einzelheiten von Ausführungsformen der Erfindung sind Gegenstand der Zeichnung, der Beschreibung oder von Unteransprüchen.

In der Zeichnung ist ein Ausführungsbeispiel der Erfindung veranschaulicht. Es zeigen:
Fig. 1 eine Bearbeitungseinrichtung mit Mess- und Steuereinrichtung, in schematisierter perspektivischer Darstellung,
Fig. 2 den Datenfluss der Bearbeitungseinrichtung und der Steuereinrichtung nach Figur 1, in schematischer Darstellung,
Fig. 3 den zeitlich gestaffelten Betrieb einzelner Bearbeitungseinheiten in drei Bearbeitungsstationen, als schematisches Zeitdiagramm,
Fig. 4 die Datenstruktur zur Beschreibung einzelner Bearbeitungsvorgänge zur Bearbeitung eines Werkstücks und deren Aufteilung auf verschieden Bearbeitungsstationen, Bearbeitungseinheiten und Arbeitsspindeln, in Form einer Tabelle,
Fig. 5 den Informationsfluss zur Verarbeitung von Messdaten durch die Steuerungseinrichtung, als schematisches Blockbild,
Fig. 6 den Informationsfluss bei der iterativen Erstellung eines optimierten Maschinensteuerprogramms für die einzelnen Bearbeitungseinheiten, in schematisierter Darstellung,
Fig. 7 einen Programmablaufplan zur Veranschaulichung der Funktion des Zuordnungsmoduls, auf hohem Abstraktionsniveau,
Fig. 8 die Funktion des Zuordnungsmoduls soweit die Aufteilung der einzelnen Bearbeitungsvorgänge auf Bearbeitungsstationen betroffen ist, auf etwas niedrigerem Abstraktionsniveau, und
Fig. 9 eine Zusammenstellung der Koordinatensysteme der Bearbeitungseinheiten in den Bearbeitungsstationen nach Figur 1.

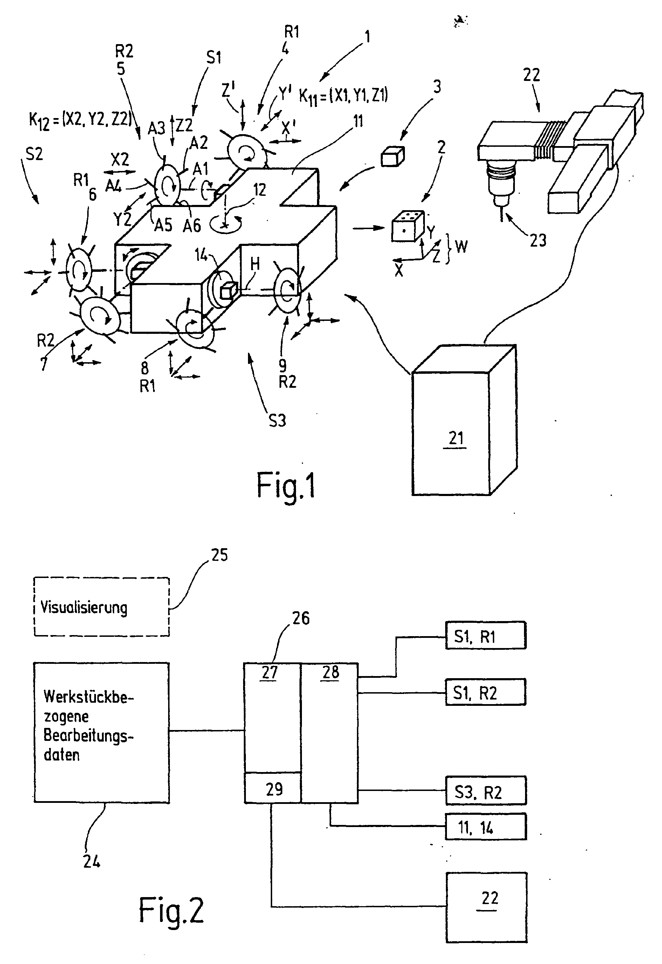

In Figur 1 ist eine Bearbeitungseinrichtung 1 veranschaulicht, die dazu dient, Werkstücke 2 aus einem Rohzustand (Rohling) 3 zu fertigen. Dies geschieht durch spanende Bearbeitung in mehreren. Bearbeitungsstationen S1, S2, S3. In den Bearbeitungsstationen S1, S2, S3 sind im vorliegenden Ausführungsbeispiel jeweils zwei Bearbeitungseinheiten R1, R2 in Form von Revolverköpfen 4, 5; 6, 7; 8, 9 vorgesehen. Die Revolverköpfe sind bspw. Kronenrevolver mit mehreren, z.B. jeweils sechs Arbeitsspindeln A1, A2, A3, A4, A5, A6. Dies ist in Figur 1 an dem Revolverkopf 5 (R2) veranschaulicht. Entsprechende Arbeitsspindeln A1 bis A6 sind an allen anderen Revolverköpfen 4, 6, 7, 8, 9 vorgesehen.

Jeder Revolverkopf 4 bis 9 ist jeweils drehbar angeordnet, so dass wahlweise jede seiner Arbeitsspindeln A1 bis A6 in eine auf das Werkstück 3 weisende Position gebracht werden kann.

Zum Transport der Werkstücke 3 von jeder Arbeitsstation zu der jeweils nächsten und zur Positionierung der Werkstücke 3 in den Arbeitsstationen S1, S2, S3 ist ein Werkstückträger 11 vorgesehen, der um eine Vertikalachse 12 schrittweise drehbar gelagert ist. Der Werkstückträger ist etwa kreuzförmig ausgebildet und weist in Umfangsrichtung orientierte Seitenflächen auf. An diesen sind sogenannte Planetentische 14 vorgesehen, die die Werkstücke 3 jeweils um Horizontalachsen H dreh- bzw. weiterschaltbar lagern. Die Anordnung ist dabei insgesamt so getroffen, dass die Revolverköpfe R1 jeweils auf die Seitenflächen der Werkstücke 3 zielen, während die Revolverköpfe R2 jeweils auf die Stirnseiten der Werkstücke 3 zielen, auf denen die Schwenkachsen H senkrecht stehen.

Die Revolverköpfe 4 bis 9 sind jeweils durch Positioniereinheiten vertikal und horizontal verstellbar gelagert, wie für jeden Revolverkopf 4 bis 9 in Figur 1 jeweils durch drei Pfeile angedeutet ist. Entsprechend ist für jeden Revolverkopf 4 bis 9 jeweils eine Positioniereinheit zur Vertikalverstellung vorgesehen und es sind jeweils zwei Positioniereinheiten zur Horizontalverstellung vorgesehen, die in Figur 1 zur Verbesserung der Übersichtlichkeit nicht weiter veranschaulicht sind. Die zugehörigen Verstellrichtungen x, y, z sind in allen Bearbeitungsstationen (d.h. für alle Revolverköpfe 4 bis 9) spezifisch festgelegt.

Wie in Figur 1 lediglich schematisch angedeutet, wird die Bearbeitungseinrichtung 1 von einer Steuereinrichtung 21 gesteuert, die alle Positionier- und Verstelleinrichtungen kontrolliert bzw. ansteuert. Die Steuereinrichtung 21 kann mit einer Messmaschine oder anderweitigen Messeinrichtung 22 verbunden sein, die in Figur 1 lediglich schematisch angedeutet ist und dazu dient, mittels eines positionierbaren Messkopfs 23 Maße und Abmessungen eines bearbeiteten Werkstücks 2 zu bestimmen.

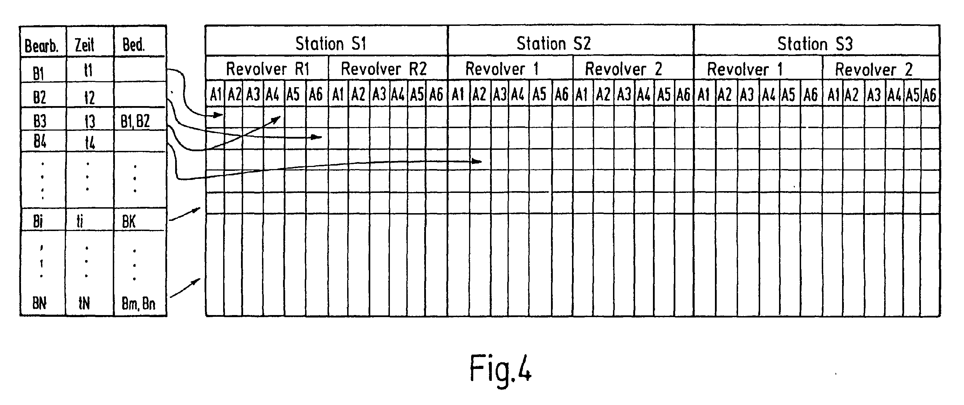

Der Aufbau der Steuerungseinrichtung 21 ist in Figur 2 sehr abstrakt veranschaulicht. Kern der Steuerungseinrichtung 21 ist ein Speicherbereich 24, der werkstückbezogene Bearbeitungsdaten enthält oder aufnehmen kann. Diese bestehen bspw. aus einer in Figur 4 links veranschaulichten Liste, in der einzelne Bearbeitungsvorgänge B1 bis BN abgelegt sind, die Bearbeitungsaufträge darstellen. Den einzelnen Bearbeitungsvorgängen sind in geeigneter Form vorliegende Daten zugeordnet, die die Art des Bearbeitungsvorgangs kennzeichnen und die Zeit ti angeben, die der Bearbeitungsvorgang beansprucht. Zusätzlich sind Daten über Bearbeitungsreihenfolgen und Bearbeitungsbedingungen vorhanden. Bspw. ist dies in der Zeile für die Bearbeitung B3 veranschaulicht, die nur stattfinden kann, wenn zuvor die Bearbeitungsschritte B1 und B2 durchlaufen worden sind. Bspw. ist dies der Fall für einen Schlichtbearbeitungsvorgang, dem ein Schruppbearbeitungsvorgang und ggfs. ein weiterer Bearbeitungsvorgang vorausgegangen sein muss. Ein weiteres Beispiel für solche Verkettungen sind Gewindebohrungen, bei deren Herstellung der Gewindeschneidvorgang erst dann vorgenommen werden kann, wenn das Kernloch fertiggebohrt worden ist.

Die in Figur 2 veranschaulichte Steuerungseinrichtung kann eine Visualisierungseinheit 25 aufweisen, um die vorgegebenen Bearbeitungsvorgänge alphanumerisch oder grafisch veranschaulichen und ggfs. verändern zu können. Dazu dienen eine Bildwiedergabeeinrichtung (Bildschirm) und Eingabegeräte wie eine Tastatur sowie grafische Eingabegeräte, falls erforderlich.

An den Speicherblock 24 ist ein Verarbeitungsblock 26 angeschlossen, der die werkzeugbezogenen Daten des Speicherblocks 24 in Maschinensteuerdaten umsetzt. Dazu enthält der Verarbeitungsblock 26 ein Zuordnungsmodul 27, das die einzelnen Bearbeitungsvorgänge B1 bis BN gemäß Figur 4 auf die einzelnen Bearbeitungsstationen S1, S2, S3 und deren Bearbeitungseinheiten Revolver R1, Revolver R2 sowie deren Arbeitsspindeln A1 bis A6 aufteilt. Ist die Aufteilung vorgenommen, gibt das Zuordnungsmodul die entsprechenden Daten an ein Ansteuermodul 28 weiter (Figur 2), das aufgrund dieser Zuordnung Maschinensteuerprogramme für die einzelnen Bearbeitungseinheiten R1, R2 und deren Arbeitsspindeln A1 bis A6 erzeugt. Außerdem erzeugt das Ansteuermodul die Ansteuerbefehle für den Werkstückträger 11 und die Planeten 14.

Zur Rückkopplung, d.h. zur Korrektur der Maschinensteuerprogramme, die die einzelnen Arbeitsstationen S1, S2, S3 und die Revolver R1, R2 sowie evtl. die Planetentische 14 steuern, dient die Messeinrichtung 22, die an ein Verfolgungsmodul 29 angeschlossen ist. Dies steht über das Zuordnungsmodul mit dem Ansteuermodul in Verbindung, so dass letzteres die Maschinensteuerprogramme der einzelnen Bearbeitungsstationen und Bearbeitungseinheiten (S1 bis S3 und R1, R2) den Messergebnissen entsprechend ändern kann. Das Verfolgungsmodul 29 kann dabei Module zur statistischen Auswertung der Messergebnisse erhalten, um insbesondere Langzeittrends entgegenzuwirken.

Das insoweit beschriebene System arbeitet wie folgt:

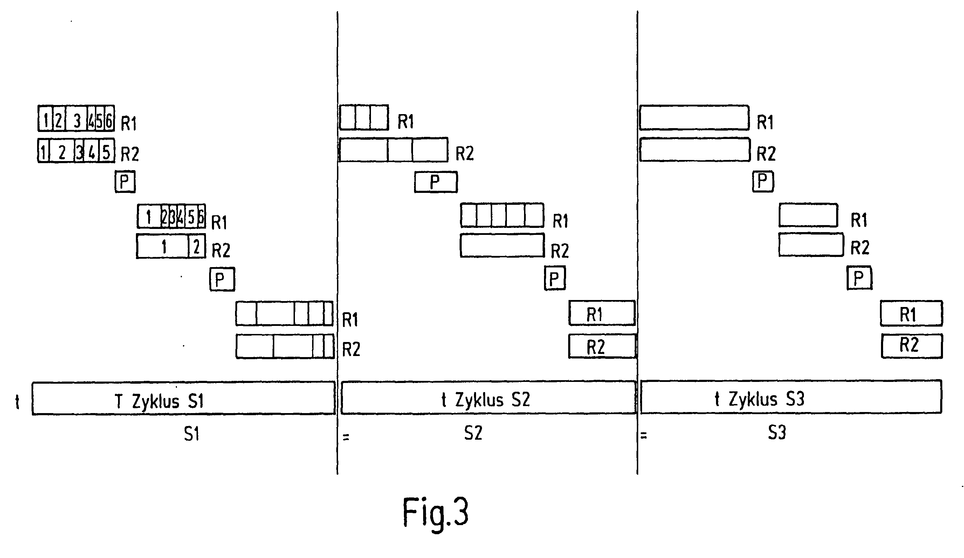

Ausgehend von den werkstückbezogenen Bearbeitungsdaten erstellt das Zuordnungsmodul 27 zunächst miteinander verkettete Maschinensteuerprogramme für die einzelnen Bearbeitungseinheiten, d.h. die Revolverköpfe 4, 5, 6, 7, 8, 9 und den Werkstückträger 11 sowie die Planetentische 14. Die einzelnen. Maschinensteuerprogramme sind zueinander synchronisiert, um zu erreichen, dass der Werkstückträger 11 in gleichmäßigem Zeittakt von Station zu Station weiterdrehen kann. Die Erstellung des Maschinensteuerprogramms erfolgt dabei vorzugsweise automatisch, wie in Figur 4 angedeutet ist. Dies bedeutet, dass die einzelnen Bearbeitungsvorgänge B1 bis BN entsprechenden Stationen S1, S2, S3, Revolvern R1, R2 und für diese wiederum Arbeitsspindeln A1 bis A6 zugeordnet werden. Dies nach dem aus Figur 3 ersichtlichen Zeitschema, wonach in jeder Station S1, S2, S3 jeweils die gleiche Zykluszeit erforderlich sein soll. Dazu werden die entsprechenden Bearbeitungsaufträge Bi so auf die einzelnen Bearbeitungsstationen S1, S2, S3 aufgeteilt, dass sich in der Summe gleiche Bearbeitungszeiten ergeben.

In Figur 3 ist eine Bearbeitung des Werkstücks in der Bearbeitungsstation S1 in drei Werkstückpositionen, in der Bearbeitungsstation S2 in drei Festpositionen und einer Bearbeitung mit bewegtem Werkstück und in der Bearbeitungsstation S3 wieder in drei festen Werkstückpositionen veranschaulicht. Bedarfsweise können auch mehr oder weniger oder unterschiedliche Werkstückpositionen zugrundegelegt werden.

In der ersten Bearbeitungsstation werden zunächst die Revolver R1, R2 gleichzeitig mit dem Werkstück in Eingriff gebracht, wobei jeder Revolver R1, R2 unabhängig von dem jeweils anderen Revolver in unterschiedliche Positionen gedreht werden kann. Es kann somit bedarfsweise jede Arbeitsspindel A1 bis A6 mit dem Werkstück in Eingriff gebracht werden. Ist die Bearbeitung des Werkstücks in der gegebenen Werkstückposition beendet, werden beide Revolver R1, R2 so verfahren, dass die betreffenden Werkzeuge außer Eingriff mit dem Werkstück gelangen. In der Pausenzeit P kann der Planetentisch nun neu positioniert werden, wonach wiederum beide Revolver R1, R2 zur Bearbeitung des Werkstücks genutzt werden. Auf diese Weise kann sich die Bearbeitung des Werkstücks in allen Bearbeitungsstationen S1, S2, S3 gleichzeitig fortsetzen.

Eine Ausnahme ist in der Bearbeitungsstation S2 anzutreffen, bei der der Revolver R2, nachdem der Revolver R1 mit dem Werkstück außer Eingriff gebracht worden ist, in Eingriff bleibt, während das Werkstück positioniert wird (Block P). Dies bspw. um eine Bogennut oder eine Umfangsnut zu fräsen, die es erfordert, das Werkstück zu bewegen, während es mit dem Werkzeug in Eingriff ist.

Die Aufteilung der Bearbeitungsvorgänge B1 bis BN ist gemäß dem Schema nach Figur 3 so vorgenommen worden, dass möglichst immer alle Revolver R1, R2 arbeiten und diese nur dann außer Eingriff mit dem Werkstück kommen, wenn das Werkstück positioniert wird (jeweils Block P - mit Ausnahme des ersten Block P in der Bearbeitungsstation S2) und dass das Weiterschalten des Werkstückträgers 11 jeweils in Pausenzeiten erfolgt, in denen alle Revolverköpfe R1, R2 außer Eingriff mit dem Werkstück sind. Diese Pausenzeiten sind in Figur 3 durch vertikale Linien angedeutet.

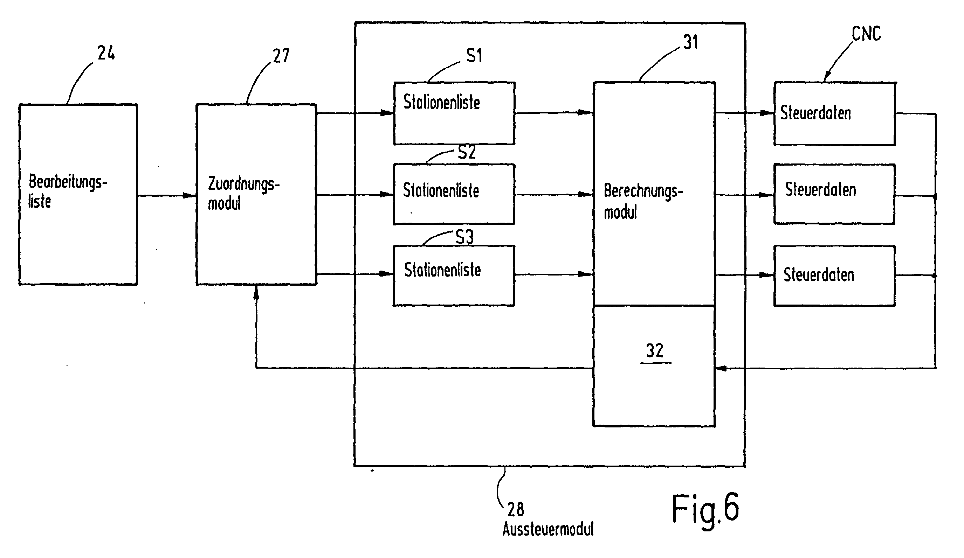

Die Aufteilung der einzelnen Bearbeitungsvorgänge auf die Bearbeitungsstationen und Bearbeitungseinheiten wird durch das Zuordnungsmodul 27 vorgenommen, dessen Einbindung in den Verarbeitungsblock 26 in Figur 6 näher veranschaulicht ist. Das Zuordnungsmodul 27 nimmt bspw. nach einem an späterer Stelle erläuterten Algorithmus eine Aufteilung und Zuordnung der Bearbeitungsvorgänge zu den einzelnen Bearbeitungsstationen vor und erzeugt somit Stationslisten für die Bearbeitungsstationen S1, S2, S3 und deren Bearbeitungseinheiten R1, R2. Die Stationslisten werden an das Ansteuermodul 28 übergeben, das ein Berechnungsmodul 31 enthält. Das Berechnungsmodul berechnet aus den der jeweiligen Bearbeitungsstation und der jeweiligen Bearbeitungseinheit zugeteilten Bearbeitungsvorgängen Maschinensteueranweisungen in Programmform und die dazu gehörigen Steuerdaten. Diese Maschinensteueranweisungen liegen dann bspw. in Form von CNC-Programmen für die jeweilige Bearbeitungseinheit (den jeweiligen Revolver 4 bis 9 und seine Positioniereinheiten) vor, wobei die einzelnen CNC-Programme untereinander durch Synchronmarken verknüpft sind. Diese CNC-Programme enthalten alle Stellbefehle für die Positioniereinheiten der Revolver und für die Revolver sowie für den Werkstückträger 11 und dessen Planeten 14.

Aus den vorliegenden Steueranweisungen (CNC-Programmen) lässt sich über einen entsprechenden Abschnitt 32 des Berechnungsmoduls die in jeder Bearbeitungsstation S1, S2, S3 erforderliche Zykluszeit berechnen. Außerdem lassen sich die einzelnen Bearbeitungsvorgänge auf tatsächliche Synchronität prüfen. Es kann durchaus sein, dass diese zunächst noch nicht vorhanden ist, obwohl das Zuordnungsmodul die Aufteilung der Bearbeitungsvorgänge so vorgenommen hat, dass sich Synchronität bei der Arbeit der einzelnen Revolver R1, R2 ergibt. Dies liegt daran, dass in der Bearbeitungsliste zwar die Bearbeitungszeiten vermerkt, die dafür aber erforderlichen Positionierzeiten noch nicht bekannt sind. Diese ergeben sich jeweils erst bei Erstellung des konkreten Maschinensteuerprogramms (CNC-Programms), weil dieses bei der Erstellung der Positionierungsanweisung berücksichtigen muss, aus welcher Position der Revolver bzw. die Bearbeitungseinheit den jeweils neuen Bearbeitungsvorgang beginnt. Dies hängt letztendlich von der konkreten Sortierung der Bearbeitungsvorgänge ab. Es kann demnach erforderlich werden, dass das Zuordnungsmodul auf Basis des durch das Berechnungsmodul (Abschnitt 32) simulierten Bearbeitungsprogramms eine korrigierte Zuordnung vornehmen muss, und dass bis zum Erhalt tatsächlicher Synchronität und gleichmäßiger Auslastung der Bearbeitungsstationen S1, S2, S3 mehrere Iterationsläufe erforderlich sind.

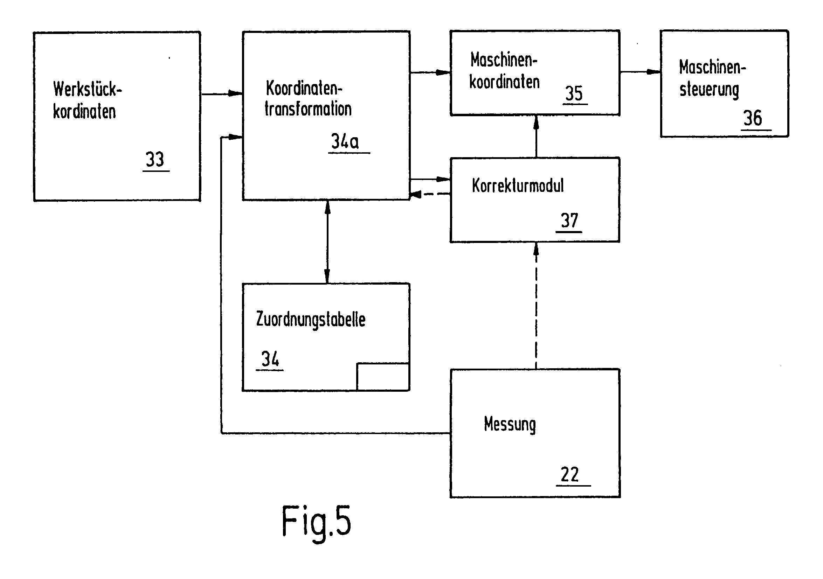

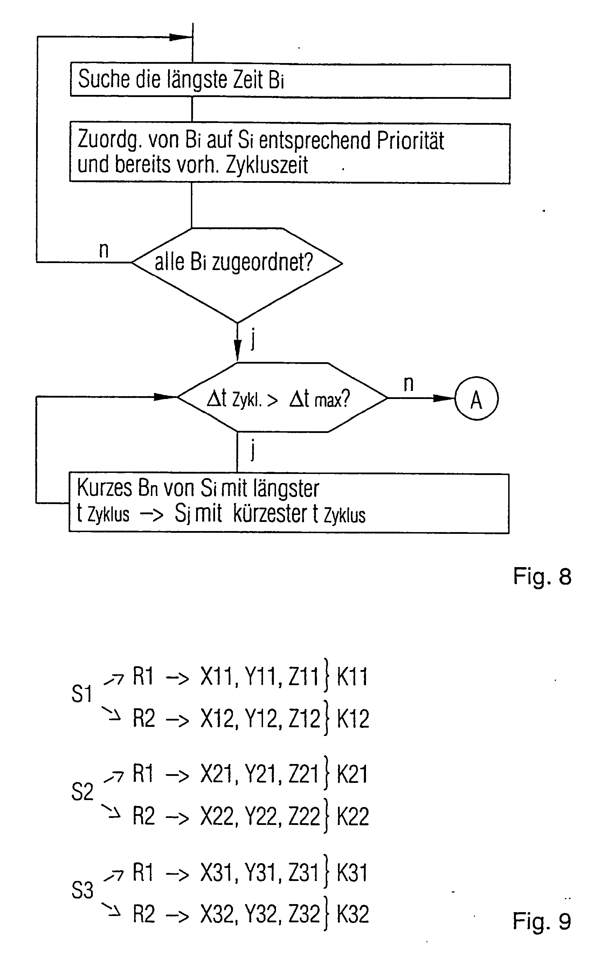

Ist das Maschinensteuerprogramm, das einzelne Steuerprogrammteile für die einzelnen Bearbeitungsstationen und deren Einheiten enthält, auf diese Weise fertiggestellt, liegt in dem Zuordnungsmodul 27 oder einer angeschlossenen Speichereinrichtung eine Zuordnungstabelle 34 mit Zuordnungen der einzelnen Bearbeitungsvorgänge zu den einzelnen Bearbeitungseinheiten vor. Auf dieser Zuordnungstabelle beruht die Korrektur der CNC-Programme auf Basis der von der Messeinrichtung 22 ermittelten Messwerte. Figur 5 veranschaulicht dies. Die erforderlichen Bearbeitungsschritte werden auf Basis einer Werkstückzeichnung oder.eines Werkstückdatensatzes 33 erstellt. Die in Werkstückkoordinaten angegebenen Werkstückabmessungen werden über einen Koordinatentransformationsblock 34a, der Zugriff auf die erstellte oder vorgegebene Zuordnungstabelle 34 hat, in Maschinenkoordinaten 35 und entsprechende Maschinenstellbefehle 36 umgerechnet. Dabei wird das Werkstückkoordinatensystem in jeweils eins der Koordinatensysteme K11 bis K32 nach Figur 9 transformiert.

Auf gleichem Wege werden die von der Messmaschine oder Messeinrichtung 22 ermittelten Messdaten zur Korrektur der einzelnen Maschinensteuerprogrammteile der Bearbeitungseinheiten herangezogen, ohne dass der Bediener im Einzelnen wissen muss, an welcher Bearbeitungsstation S1, S2, S3 und mit welcher Arbeitsspindel A1 bis A6 welches Revolverkopfs R1, R2 der betreffende Bearbeitungsvorgang durchgeführt wird, der das gemessene Maß erzeugt. Die Messeinrichtung 22 ist dazu über die Zuordnungstabelle 34 mit einem Korrekturmodul 37 verbunden, der die Korrektur in Maschinenkoordinaten, d.h. die Korrektur der betreffenden CNC-Programmteile vornimmt. Alternativ kann das Korrekturmodul 27 auch direkt mit der Messeinrichtung 22 verbunden sein und über die Zuordnungstabelle 34 Informationen darüber erhalten, welche Bearbeitungseinheit in welcher Bearbeitungsstation die betreffende interessierende Bearbeitung vornimmt. Dazu gehört die ebenfalls aus der Zuordnungstabelle zu entnehmende Information, in welcher Position sich dabei das Werkstück 3 befindet (Position des Planetentischs 14), so dass die entsprechende Koordinatenumrechnung vorgenommen werden kann. Letzteres ist in Figur 5 durch gestrichelte Linien angedeutet.

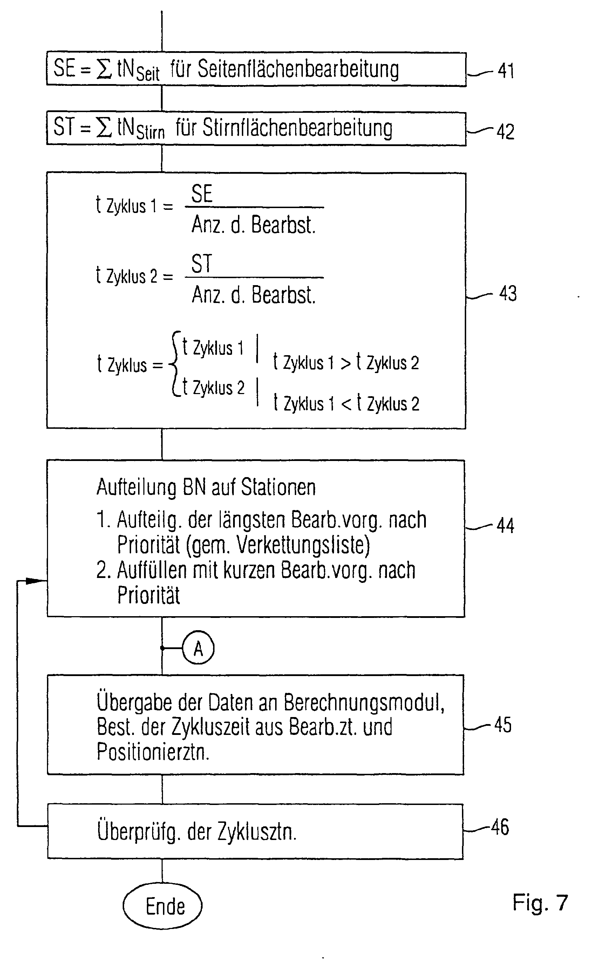

In den Figuren 7 und 8 ist die Funktion des Zuordnungsmoduls in einer einfachen Ausführungsform auf abstrakte Weise veranschaulicht. Gemäß Figur 7 beginnt das Zuordnungsmodul zur Aufteilung der einzelnen Bearbeitungsvorgänge Bi auf Bearbeitungsstationen, Bearbeitungseinheiten und Arbeitsspindeln zunächst damit, alle Bearbeitungszeiten für die Seitenflächenbearbeitung und alle Bearbeitungszeiten für die Stirnflächenbearbeitung des Werkstücks aufzusummieren (Blöcke 41, 42). Um eine grobe Abschätzung zu gewinnen, welche minimale Zykluszeit in jeder Bearbeitungsstation erhalten werden könnte, wird zunächst die Gesamtzeit für die Seitenflächenbearbeitung durch die Anzahl der vorhandenen Bearbeitungsstationen geteilt. Dies ergibt tZyklus1. Entsprechend wird die für die Stirnflächenbearbeitung insgesamt erforderliche Bearbeitungszeit durch die Anzahl der verfügbaren Bearbeitungsstationen geteilt. Dies ergibt tZyklus2. Unter Seitenflächenbearbeitung wird dabei die Bearbeitung von Flächen des Werkstücks verstanden, die aus einer Radialrichtung bezogen auf die Dreh- oder Schwenkachse des Werkstücks bearbeitet werden. Unter Stirnflächen werden solche Flächen verstanden, die aus einer Richtung parallel zur Dreh- oder Schwenkachse des Werkstücks bearbeitet werden. Als minimale Zykluszeit wird dann tZyklusl oder tZyklus2 angesehen, je nachdem welche größer ist. Diese Abschätzung erfolgt in Block 43.

Die Aufteilung der einzelnen Bearbeitungsvorgänge BN auf die Bearbeitungsstationen S1, S2, S3 und deren Bearbeitungseinheiten wird beginnend bei den längsten Bearbeitungsvorgängen entsprechend ihrer Priorität vorgenommen. Dies bedeutet, dass in der Liste der Bearbeitungsvorgänge gemäß Figur 4 zunächst, wie in Figur 8 veranschaulicht ist, die längste Bearbeitungszeit Bi gesucht und auf eine Bearbeitungsstation zugeordnet wird. Setzt die Durchführung des Bearbeitungsvorgangs gemäß der Liste der Bedingungen (Figur 4, linker Tabellenteil, rechte Spalte) keine Vorgängerbearbeitungsschritte voraus, kann der Vorgang einer ersten Bearbeitungsstation zugeordnet werden. Andernfalls wird er bevorzugt einer in der Bearbeitungsfolge weiter hinten liegenden Bearbeitungsstation S2 oder S3 zugeordnet.

Danach werden die weiteren Bearbeitungsstationen mit Bearbeitungsvorgängen aufgefüllt, wie in Figur 7 durch Block 44 veranschaulicht ist. Dies erfolgt gemäß Figur 8, indem zunächst überprüft wird, ob alle Bearbeitungsvorgänge Bi eine Zuordnung erfahren haben. Falls nicht, wird aus den verbleibenden Bearbeitungsvorgängen der jeweils am längsten dauernde herausgesucht und, wie oben erläutert, entsprechend seiner Priorität auf einer Bearbeitungsstation zugeordnet. Dies nach dem zusätzlichen Kriterium, dass möglichst die Zuordnung zu einer solchen Bearbeitungsstation vorgenommen werden soll, die die noch größte verbleibende freie Zeit hat.

Sobald alle Bearbeitungsvorgänge auf Bearbeitungseinheiten aufgeteilt sind, wird überprüft, ob die sich ergebenden Zykluszeiten in den einzelnen Bearbeitungsstationen einen vorgegebenen Maximalwert Δtmax überschreiten. Die Zykluszeiten ergeben sich jeweils aus einer Überschlagsrechnung, die die Bearbeitungszeiten gemäß vorgegebener Bearbeitungsvorgangsliste (Figur 4, links) summiert. Pauschaliert kann ein Zuschlag für durchschnittliche Positionierzeiten gemacht werden. Wird die maximale Zykluszeit, die bspw. auf der in Block 43 nach Figur 7 berechneten Zeit tZyklus (plus evtl. einem Zuschlag) bestehen kann, nicht überschritten, hat das Programm eine akzeptable Zuordnung gefunden und kann, wie in Figur 7 veranschaulicht, mit Block 45, d.h. der Übergabe der Daten über die Zuordnung an eine Ansteuereinrichtung weiter fortsetzen. Falls nicht, unternimmt das Programm, wie in Figur 8 veranschaulicht, den Versuch, die Differenzen zwischen den einzelnen Zykluszeiten zu minimieren. Dieser Programmabschnitt, der auch als gesondertes Sortiermodul angesehen werden kann, beinhaltet das Verschieben von kurzen Bearbeitungsvorgängen aus den Bearbeitungsstationen mit längster Zykluszeit in Arbeitsstationen mit zuvor kürzester Zykluszeit. Dieser Programmabschnitt kann nach unterschiedlichen Kriterien beendet werden. Bspw. ist hier möglich, nach einer festen Anzahl von Versuchen oder ähnlichen Kriterien abzubrechen, falls sich die vorhandenen Zykluszeitdifferenzen nicht minimieren lassen.

Wie in Figur 7 durch Block 45 veranschaulicht, wird die vorläufige, von dem Zuordnungsmodul vorgenommene Zuordnung an das Berechnungsmodul übergeben, das nunmehr die Maschinensteuerprogramme erzeugt. Aus diesen ergeben sich die tatsächlichen Bearbeitungszeiten aus den vorgesehenen Bearbeitungszeiten und den zur Positionierung der Werkstücke und der Bearbeitungseinheiten erforderlichen Positionierzeiten. Mit diesen tatsächlichen Bearbeitungszeiten werden nun die Zykluszeiten in Block 46 überprüft. Weisen diese nach wie vor keine Differenzen auf, wird die vorgenommen Zuordnung beibehalten und das Zuordnungsmodul beendet seine Arbeit. Sind die Differenzen zwischen den dann tatsächlich sich ergebenden Zykluszeiten jedoch zu groß, wird auf Basis der realen Bearbeitungszeiten die Aufteilung der Bearbeitungsvorgänge überprüft bzw. korrigiert. Dazu wird zu dem Block 44 zurückverzweigt. Dies konkret, indem bspw. erneut in die untere Schleife gemäß Figur 8 eingetreten wird, d.h. indem das Ausgleichsmodul erneut gestartet wird. Es ist jedoch auch möglich, den gesamten Zuordnungsvorgang erneut vorzunehmen, der nun aufgrund aktualisierter Bearbeitungszeiten zu einem anderen Ergebnis kommen kann. Die aktualisierten Bearbeitungszeiten ergeben sich dann bspw. aus den Bearbeitungszeiten, die nach Erstellung des CNC-Programms ermittelt worden sind und die eine angenäherte Schätzung für die Positionierzeiten enthalten, die genauer sein kann als der vorab zugrundegelegte Vorgabezeitwert.

Ein Steuerprogramm für eine Bearbeitungseinrichtung mit mehreren Bearbeitungsstationen ist auf besondere Weise bedienerfreundlich ausgelegt, indem das Steuerprogramm Steueranweisungen, die in einem werkstückbezogenen Koordinatensystem angegeben werden, automatisch in Maschinensteueranweisungen umrechnet, die in den jeweiligen Bearbeitungsstationen gelten. Die Umrechnung erfolgt auf Basis einer Zuordnungstabelle, die aussagt, welcher Bearbeitungsvorgang in welcher Bearbeitungsstation durchgeführt wird. Diese Tabelle kann automatisch erstellt werden. Dazu enthält das Steuerprogramm ein entsprechendes Zuordnungsmodul, das automatisch eine gleichmäßige Auslastung der einzelnen Bearbeitungsstationen und Bearbeitungseinheiten herbeiführt, soweit möglich. Insbesondere vereinfacht sich durch dieses System nicht nur die Erstprogrammierung, sondern auch die nach Justage bzw. Korrektur der Maschinensteuerprogramme, wenn sich Bearbeitungsfehler oder -Abweichungen ergeben. Dies können mit einer Messeinrichtung aufgenommen werden, die das Werkstück in werkstückbezogenen Koordinaten oder in messmaschinenspezifischen Koordinaten vermisst. Das Zuordnungsmodul bzw. eine vorhandene Zuordnungstabelle dienen als Basis für die automatische Umsetzung der gemessenen Abweichung der Istmaße des Werkstücks von den Sollmaßen in Korrekturbefehle bzw. in eine Änderung der Maschinensteuerprogramme.

## Patentansprüche

1. Bearbeitungseinrichtung (1)
mit mehreren Bearbeitungsstationen (S1, ..., SN), die jeweils wenigstens eine Arbeitsspindel (A1) aufweisen und die dazu dienen, an mehrseitigen Werkstücken (3) aus unterschiedlichen Bearbeitungsrichtungen vorgegebene Bearbeitungsvorgänge (B1,...,BN) durchzuführen,
mit einer Steuerungseinrichtung (21), die eine Speichereinrichtung (34) zur Speicherung einer Zuordnung der vorgegebenen Bearbeitungsvorgänge (B1,..., BN) zu den Bearbeitungsstationen (S1, S2, S3) und Arbeitsspindel (A1) aufweist, **gekennzeichnet durch**
eine Koordinatentransformationseinrichtung (34a) zur Umwandlung von Werkstück bezogenen Maßen in Stellbefehle für die Bearbeitungsstationen (S1, S2, S3) in deren eigenen Koordinatensystemen,
wobei die Koordinatentransformationseinrichtung (34a) mit der Speichereinrichtung (34) verbunden ist, um die Koordinatentransformation anhand der in der Speichereinrichtung (34) abgespeicherten Zuordnung der vorgegebenen Bearbeitungsvorgänge (B1,..., BN) zu den Bearbeitungsstationen (S1, S2, S3) und Arbeitsspindel (A1) vorzunehmen.

2. Bearbeitungseinrichtung nach Anspruch 1, **dadurch gekennzeichnet, dass** in den Bearbeitungsstationen (S1, S2, S3) jeweils wenigstens zwei Bearbeitungseinheiten (R1, R2) angeordnet sind, die dazu eingerichtet sind, das Werkstück (3) aus zwei unterschiedlichen Richtungen zu bearbeiten.

3. Bearbeitungseinrichtung nach Anspruch 2, **dadurch gekennzeichnet, dass** zur Positionierung der Werkstücke (3) in den Bearbeitungsstationen (S1, S2, S3) Werkstückaufnahmen (14) vorgesehen sind.

4. Bearbeitungseinrichtung nach Anspruch 3, **dadurch gekennzeichnet, dass** die Werkstückaufnahmen (14) jeweils mit Positioniereinrichtungen verbunden sind, die dazu dienen, das Werkstück (3) in der betreffenden Bearbeitungsstation (S1, S2, S3) in voneinander verschiedene Bearbeitungspositionen zu bewegen und bedarfsweise in diesen zu fixieren.

5. Bearbeitungseinrichtung nach Anspruch 1, **dadurch gekennzeichnet, dass** in der Steuereinrichtung (21) jeder Bearbeitungsstationen (S1, S2, S3) jeweils ein eigenes Koordinatensystem (K11,..., K32) zugeordnet ist.

6. Bearbeitungseinrichtung nach Anspruch 1, **dadurch gekennzeichnet, dass** die Bearbeitungseinheiten (S1, S2, S3) wenigstens gruppenweise untereinander gleich ausgebildet sind.

7. Bearbeitungseinrichtung nach Anspruch 1, **dadurch gekennzeichnet, dass** die Werkstücke durch eine Transporteinrichtung (11) im Gleichtakt von Bearbeitungsstation zu Bearbeitungsstation gefördert werden.

8. Bearbeitungseinrichtung nach Anspruch 1, **dadurch gekennzeichnet, dass** das Zuordnungsmodul (34) an eine Speichereinrichtung (24) angeschlossen ist, die eine Liste (Fig. 4) der an dem Werkstück auszuführenden Bearbeitungsoperationen (B1,..., BN) enthält.

9. Bearbeitungseinrichtung nach Anspruch 8, **dadurch gekennzeichnet, dass** in der Liste (Fig. 4) die zugehörigen Bearbeitungsdauern (ti) vermerkt sind.

10. Bearbeitungseinrichtung nach Anspruch 8, **dadurch gekennzeichnet, dass** in der Liste (Fig. 4) die notwendige Bearbeitungsreihenfolgen (Bed.) vermerkt sind.

11. Bearbeitungseinrichtung nach Anspruch 8, **dadurch gekennzeichnet, dass** das Zuordnungsmodul (34) die erforderlichen Bearbeitungsvorgänge (Bi) der Liste den Bearbeitungsstationen (S1, S2, S3) derart zuordnet, dass zeitliche Differenzen (ΔtZyklus) zwischen den in den Bearbeitungsstationen (S1, S2, S3) durchzuführenden Bearbeitungsvorgängen minimiert sind.

12. Bearbeitungseinrichtung nach Anspruch 11, **dadurch gekennzeichnet, dass** das Zuordnungsmodul (34) für jede Bearbeitungsstation (S1, S2, S3) und jede Arbeitsspindel (A1, A2, A3, A4, A5, A6) Stationslisten (Fig. 6) mit den auszuführenden Bearbeitungsvorgängen erzeugt und dass ein Berechnungsmodul (31) vorhanden ist, das die Stationslisten in Steuerdateien (CNC) umsetzt, die Stellbefehle für die Bearbeitungsstationen (S1, S2, S3) enthalten.

13. Bearbeitungseinrichtung nach Anspruch 12, **dadurch gekennzeichnet, dass** das Zuordnungsmodul (34) mit dem Berechnungsmodul (31) verbunden ist, um die sich durch Kombination der einzelnen Bearbeitungsvorgänge ergebenden Zykluszeiten (tZyklus) zu erhalten.

14. Bearbeitungseinrichtung nach Anspruch 13, **dadurch gekennzeichnet, dass** das Zuordnungsmodul (34) die vorgenommene Zuordnung der Bearbeitungsvorgänge zu Bearbeitungsstationen (S1, S2, S3) anhand der von dem Berechnungsmodul (34) erhaltenen Zykluszeiten überprüft und ändert, falls die berechneten Zykluszeiten an den einzelnen Bearbeitungsstationen (S1, S2, S3) Differenzen aufweisen, die eine vorgegebene Obergrenze (ΔtZyklusₘₐₓ) überschreiten.

15. Bearbeitungseinrichtung nach Anspruch 1, **dadurch gekennzeichnet, dass** die Koordinatentransformationseinrichtung (34a) mit einer Korrektureinrichtung (37) verbunden ist, die mit einer Messeinrichtung (22) verbunden ist, die zur Ermittlung von Werkstückabmessungen eingerichtet ist.

16. Verfahren zum Betrieb einer Bearbeitungseinrichtung mit mehreren Bearbeitungsstationen (S1, S2, S3), in denen Werkstücke (3) mittels Positioniereinrichtungen in unterschiedliche Bearbeitungspositionen verbracht und in diesen bearbeitet werden können, und mit Bearbeitungseinheiten (R1, R2), die Arbeitsspindeln (A1, A2,...) aufweisen, die in Bezug auf die Werkstücke (3) mittels Verstelleinrichtungen positionierbar sind,
wobei das Verfahren in Form eines Programms ausgeführt wird, das ein Zuordnungsmodul (34) aufweist, das die erforderlichen Bearbeitungsvorgänge bestimmten Bearbeitungsstationen, Werkstückpositionen und Bearbeitungseinheiten (R1, R2) sowie Arbeitsspindeln (A1, A2,...) zuordnet und wobei das Programm als Eingabedaten die Werkstückabmessungen des herzustellenden Werkstücks und die dazu erforderlichen Bearbeitungsvorgänge (Bi) erhält und die Bearbeitungsvorgänge (Bi) ihrer Reihenfolge entsprechend so auf die Bearbeitungsstationen (S1, S2, S3) und Bearbeitungseinheiten (R1, R2) aufteilt, dass die Auslastung der einzelnen Bearbeitungsstationen (S1, S2, S3) und Bearbeitungseinheiten (R1, R2) im Wesentlichen gleich ist, **dadurch gekennzeichnet,**
**dass** eine Koordinatentransformationseinrichtung (34a) zur Umwandlung von Werkstück bezogenen Maßen in Stellbefehle für die Bearbeitungsstationen (S1, S2, S3) in deren eigenen Koordinatensystemen entsprechende Steueranweisungen in Bearbeitungsstations-spezifischen Koordinatensystemen (K11,..., K32) erzeugt
wobei die mit der Speichereinrichtung (34) verbundene Koordinatentransformationseinrichtung (34a) die Koordinatentransformation anhand der in der Speichereinrichtung (34) abgespeicherten Zuordnung der vorgegebenen Bearbeitungsvorgänge (B1,..., BN) zu den Bearbeitungsstationen (S1, S2, S3) und Arbeitsspindel (A1) vornimmt.

17. Programm nach Anspruch 16, **dadurch gekennzeichnet, dass** es bei einer Bearbeitungseinrichtung (1) mit einer Messstation (22) zur Messung der Werkstückabmessungen eines fertig bearbeiteten Werkstücks in einem auf das Werkstück bezogenen Koordinatensystem (W) die Messdaten zur Kontrolle des Bearbeitungsergebnisses nutzt.

18. Programm nach Anspruch 17, **dadurch gekennzeichnet, dass** das Programm die Steueranweisungen (CNC) über das Zuordnungsmodul (34) ändert, wenn die Messdaten außerhalb einer vorgegebenen Toleranz liegen.

## Claims

1. Machining assembly (1)
with a plurality of machining stations (S1, ..., SN), which respectively have at least one work spindle (A1) and which serve to conduct predetermined machining operations (B1, ..., BN) on multiple-sided workpieces (3) from different machining directions,
with a control device (21), which has a storage device (34) for storing an allocation of the predetermined machining operations (B1, ..., BN) to the machining stations (S1, S2, S3) and work spindle (A1),
**characterised by**
a coordinate transformation device (34a) for transforming workpiece-related dimensions into control commands for the machining stations (S1, S2, S3) in their own coordinate systems,
wherein the coordinate transformation device (34a) is connected to the storage device (34) in order to conduct the coordinate transformation on the basis of the allocation of the predetermined machining operations (B1, ..., BN) stored in the storage device (34) to the machining stations (S1, S2, S3) and work spindle (A1).

2. Machining assembly according to claim 1, **characterised in that** at least two machining units (R1, R2), which are fitted to machine the workpiece (3) from two different directions, are respectively arranged in the machining stations (S1, S2, S3).

3. Machining assembly according to claim 2, **characterised in that** workpiece seatings (14) are provided to position the workpieces (3) in the machining stations (S1, S2, S3).

4. Machining assembly according to claim 3, **characterised in that** the workpiece seatings (14) are respectively connected to positioning devices, which serve to move the workpiece (3) in the respective machining station (S1, S2, S3) in different machining positions from one another and, where necessary, secure them in these.

5. Machining assembly according to claim 1, **characterised in that** an own associated coordinate system (K11,..., K32) is respectively provided in the control device (21) of each machining station (S1, S2, S3).

6. Machining assembly according to claim 1, **characterised in that** the machining units (S1, S2, S3) are configured identically to one another at least in groups.

7. Machining assembly according to claim 1, **characterised in that** the workpieces are conveyed synchronously from machining station to machining station by a transport device (11).

8. Machining assembly according to claim 1, **characterised in that** the allocation module (34) is connected to a storage device (24), which contains a list (Figure 4) of the machining operations (B1, ..., BN) to be conducted on the workpiece.

9. Machining assembly according to claim 8, **characterised in that** the associated machining periods (ti) are noted in the list (Figure 4).

10. Machining assembly according to claim 8, **characterised in that** the necessary machining sequences (Bed.) are noted in the list (Figure 4).

11. Machining assembly according to claim 8, **characterised in that** the allocation module (34) allocates the necessary machining operations (Bi) of the list to the machining stations (S1, S2, S3) in such a manner that time differences (Δtcycle) are minimised between the machining operations to be conducted in the machining stations (S1, S2, S3).

12. Machining assembly according to claim 11, **characterised in that** the allocation module (34) generates station lists (Figure 6) with the machining operations to be conducted for each machining station (S1, S2, S3) and each work spindle (A1, A2, A3, A4, A5, A6), and that a calculation module (31) is provided, which converts the station lists into control data files (CNC), which contain the control commands for the machining stations (S1, S2, S3).

13. Machining assembly according to claim 12, **characterised in that** the allocation module (34) is connected to the calculation module (31) in order to obtain the cycle times (tcycle) resulting from the combination of the individual machining operations.

14. Machining assembly according to claim 13, **characterised in that** the allocation module (34) checks the conducted allocation of the machining operations to machining stations (S1, S2, S3) on the basis of the cycle times received from the calculation module (34) and changes this if the calculated cycle times at the individual machining stations (S1, S2, S3) have differences, which exceed a predetermined upper limit (Δtcycleₘₐₓ).

15. Machining assembly according to claim 1, **characterised in that** the coordinate transformation device (34a) is connected to a correction device (37), which is connected to a measuring device (22) fitted for determining workpiece measurements.

16. Method for operating a machining assembly with a plurality of machining stations (S1, S2, S3), in which workpieces (3) are brought into different machining positions by means of positioning devices and can be machined therein, and with machining units (R1, R2), which have work spindles (A1, A2, ...), which can be positioned relative to the workpieces (3) by means of adjusting devices,
wherein the method is configured in the form of a program, which has an allocation module (34), which allocates the necessary machining operations to specific machining stations, workpiece positions and machining units (R1, R2) as well as work spindles (A1, A2, ...), and wherein the program receives the workpiece dimensions of the workpiece to be produced and the machining operations (Bi) necessary for this as input data, and allocates the machining operations (Bi) in their appropriate sequence to the machining stations (S1, S2, S3) and machining units (R1, R2) in such a way that the load of the individual machining stations (S1, S2, S3) and machining units (R1, R2) is substantially the same, **characterised in that**
for transforming workpiece-related dimensions into control commands for the machining stations (S1, S2, S3) in their own coordinate systems, a coordinate transformation device (34a) generates corresponding control instructions in machining station-specific coordinate systems (K11,..., K32),
wherein the coordinate transformation device (34a) connected to the storage device (34) conducts the coordinate transformation on the basis of the allocation of the predetermined machining operations (B1, ..., BN) stored in the storage device (34) to the machining stations (S1, S2, S3) and work spindle (A1).

17. Program according to claim 16, **characterised in that** in the case of a machining assembly (1) with a measurement station (22) for measuring the workpiece dimensions of a finished workpiece in a workpiece-related coordinate system (W) the program uses the measured data to check the machining result.

18. Program according to claim 17, **characterised in that** the program changes the control instructions (CNC) by means of the allocation module (34) if the measured data lie outside a predetermined tolerance.

## Revendications

1. Dispositif d'usinage (1) qui comprend :
- plusieurs postes d'usinage (S1, ..., SN) qui présentent chacun au moins une broche d'usinage (A1) et qui servent à effectuer sur des pièces multifaces (3) des opérations d'usinage selon différentes directions d'usinage
- un dispositif de commande (21), qui présente un dispositif d'enregistrement (34) pour enregistrer une affectation des opérations d'usinage (B1, ..., BN) aux postes d'usinage (S1, S2, S3) et à la broche d'usinage (A1)
ce dispositif étant **caractérisé en ce qu'**il comporte un dispositif de conversion de coordonnées (34a) qui sert à convertir des mesures concernant la pièce en ordres de positionnement des postes d'usinage dans leurs propres systèmes de coordonnées, ce dispositif de conversion de coordonnées (34a) étant relié au dispositif d'enregistrement (34), de manière à réaliser la conversion de coordonnées au moyen de l'affectation, enregistrée dans le dispositif d'enregistrement, des opérations d'usinage (B1, ..., BN) prédéfinies aux postes d'usinage (S1, S2, S3) et aux broches d'usinage (A1).

2. Dispositif d'usinage selon la revendication 1, **caractérisé en ce que** dans chacun des postes d'usinage (S1, S2, S3) se trouvent au moins deux unités d'usinage (R1, R2) conçues pour usiner la pièce (3) selon deux directions différentes.

3. Dispositif d'usinage selon la revendication 2, **caractérisé en ce que** des logements de pièce (14) sont prévus pour positionner les pièces (3) dans les postes d'usinage (S1, S2, S3).

4. Dispositif d'usinage selon la revendication 3, **caractérisé en ce que** les logements de pièce (14) sont reliés chacun à des dispositifs de positionnement qui servent dans le poste d'usinage (S1, S2, S3) concerné à déplacer la pièce pour l'amener dans des positions d'usinage différentes et si besoin à la fixer dans ces positions.

5. Dispositif d'usinage selon la revendication 1, **caractérisé en ce que** dans le dispositif de commande (21), à chaque poste d'usinage (S1, S2, S3) est associé un système de coordonnées propre (K11,..., K32).

6. Dispositif d'usinage selon la revendication 1, **caractérisé en ce que** les unités d'usinage (S1, S2, S3) sont constituées au moins en groupes identiques entre eux.

7. Dispositif d'usinage selon la revendication 1, **caractérisé en ce que** les pièces sont déplacées par un dispositif de transport (11) en synchronisme, de poste d'usinage en poste d'usinage.

8. Dispositif d'usinage selon la revendication 1, **caractérisé en ce que** le module d'affectation (34) est raccordé à un dispositif d'enregistrement qui contient une liste (figure 4) des opérations (B1, ..., BN) à effectuer sur la pièce.

9. Dispositif d'usinage selon la revendication 8, **caractérisé en ce que** dans la liste (figure 4) sont notés les temps d'usinage (ti) correspondants.

10. Dispositif d'usinage selon la revendication 8, **caractérisé en ce que** dans la liste (figure 4) sont notés les ordres nécessaires correspondant aux opérations d'usinage (Bed.).

11. Dispositif d'usinage selon la revendication 8, **caractérisé en ce que** le module d'affectation (34) affecte les opérations d'usinage nécessaires (Bi) à la liste des postes d'usinage (S1, S2, S3) de manière à minimiser les différences de durée (Δt de cycle) entre les opérations d'usinage à réaliser dans les postes d'usinage (S1, S2, S3).

12. Dispositif d'usinage selon la revendication 11, **caractérisé en ce que** le module d'affectation (34) établit, pour chaque poste d'usinage (S1, S2, S3) et pour chaque broche d'usinage (A1, A2, A3, A4, A5, A6) des listes de postes (figure 6) avec les opérations d'usinage à effectuer, et il existe un module de calcul (31) qui convertit les listes de postes en fichiers de commande (CNC) contenant les ordres de positionnement concernant les postes d'usinage (S1, S2, S3).

13. Dispositif d'usinage selon la revendication 12, **caractérisé en ce que** le module d'affectation (34) est relié au module de calcul (31) pour recevoir les temps de cycle (t de cycle) résultant de la combinaison des différentes postes d'usinage.

14. Dispositif d'usinage selon la revendication 13, **caractérisé en ce que** le module d'affectation (34) contrôle l'affectation réalisée des opérations d'usinage (S1, S2, S3) au moyen des temps de cycle établis par le module de calcul (31) et modifie cette affectation quand les temps de cycle calculés présentent sur les postes d'usinage (S1, S2, S3) individuels, des différences qui dépassent une limite supérieure prédéfinie.

15. Dispositif d'usinage selon la revendication 1, **caractérisé en ce que** l'unité de conversion de coordonnées (34a) est reliée à une unité de correction (37) elle-même reliée à un dispositif de mesure (22) conçu pour déterminer les dimensions de la pièce.

16. Procédé pour faire fonctionner un dispositif d'usinage comprenant plusieurs postes d'usinage (S1, S2, S3) dans lesquels des pièces sont amenées au moyen du dispositif de positionnement, à des positions d'usinage différentes dans lesquelles elles sont usinées, ainsi que des unités d'usinage (R1, R2) présentant des broches d'usinage (A1, A2, ...) qui peuvent être positionnées par rapport aux pièces (3) au moyen du dispositif de positionnement,
étant précisé que
le procédé a la forme d'un programme présentant un module d'affectation (34) qui affecte les opérations d'usinage nécessaires à des postes d'usinage définis, à des positions de pièce, à des unités d'usinage (R1, R2) ainsi qu'à des broches d'usinage (A1, A2, ...), le programme réunissant en tant que données d'entrée, les dimensions de la pièce à fabriquer ainsi que des opérations d'usinage (Bi) nécessaires pour cela, et le module (34) répartit les opérations d'usinage (Bi) en correspondance avec leur succession entre les postes d'usinage (S1, S2, S3) et les unités d'usinage (R1, R2) de manière que les charges des différents postes d'usinage (S1, S2, S3) et unités d'usinage (R1, R2) soient essentiellement égales,
ce procédé étant **caractérisé en ce qu'**
- un dispositif de conversion des coordonnées (34a), afin de convertir des mesures relatives à la pièce en ordres de positionnement destinés aux postes d'usinage (S1, S2, S3) dans les systèmes de coordonnées qui leur sont propres, produit des indications de commande dans des systèmes de coordonnées (K11, ..., K32) spécifiques au poste d'usinage,
- le dispositif de conversion des coordonnées (34a) relié au dispositif d'enregistrement (34) effectue la conversion des coordonnées à l'aide de l'affectation, enregistrée dans le dispositif d'enregistrement (34), des opérations d'usinage prédéfinies (B1, ..., BN) aux postes d'usinage (S1, S2, S3) et aux broches d'usinage.

17. Programme selon la revendication 16, **caractérisé en ce que** dans un dispositif d'usinage (1) comprenant une station de mesure (22) pour mesurer les dimensions d'une pièce dont l'usinage est achevé, il utilise les données de mesure dans un système de coordonnées (W) en rapport avec la pièce, pour contrôler les résultats de l'usinage.

18. Programme selon la revendication 17, **caractérisé en ce qu'**il modifie les indications de commande (CNC) par l'intermédiaire du module d'affectation (34), quand les données de mesure dépassent une tolérance prédéfinie.
